# EUROPEAN PATENT SPECIFICATION

(11) **EP 1 788 811 B1**
(45) Date of publication and mention of the grant of the patent: **23.12.2009**
(21) Application number: 05772524.4
(22) Date of filing: 21.07.2005
(51) Int. Cl.: H04N 7/173, H04N 7/167

(54) **A METHOD FOR OBTAINING USER'S ON-LINE INFORMATION**
VERFAHREN ZUR GEWINNUNG VON ONLINE-INFORMATIONEN EINES BENUTZERS
PROCEDES D'OBTENTION D'INFORMATIONS EN LIGNE D'UTILISATEUR

(30) Priority: 21.07.2004 CN 200410070979
(43) Date of publication of application: 23.05.2007
(73) Proprietor: Huawei Technologies Co., Ltd., Longgang District, Shenzhen Guangdong 518129 (CN)
(72) Inventor: LIU, Jinming, Shenzhen, Guangdong 518129 (CN); JU, Degang, Shenzhen, Guangdong 518129 (CN); YAO, Jun, Shenzhen, Guangdong 518129 (CN); XU, Yonghong, Shenzhen, Guangdong 518129 (CN); HU, Junling, Shenzhen, Guangdong 518129 (CN)
(74) Representative: Thun, Clemens
(86) International application number: PCT/CN2005/001093
(87) International publication number: WO 2006/007796

(56) References cited:
- EP-A- 1 638 331
- CN-A- 1 308 816
- CN-A- 1 386 228
- JP-A- 2001 333 056
- US-A1- 2003 033 601
- US-B1- 6 233 341

## Description

### Field of the Invention

The present invention relates to the field of digital television (DTV), specifically to a method for acquiring on-line information of subscribers in a DTV network.

### Background of the Invention

The DTV network includes a DTV head end (simply referred to as head end) and several subscriber terminals. The head end transmits encrypted DTV programs through a broadcasting network to each subscriber terminal respectively, which receives signals via a set top box (STB), then decrypts the DTV programs using a key in a subscriber identification module of the subscriber terminal, and eventually plays the programs by a television set. The most common subscriber identification module is smart card, and the information of the key has been set into the smart card when the subscriber buy it.

The disclosed DTV network is a unidirectional network. However, with the enrichment of DTV services, the DTV network tends to be a bidirectional network so as to support interactive services. There is a reference model of DTV network with interactive function defined in digital video broadcasting (DVB) standard.

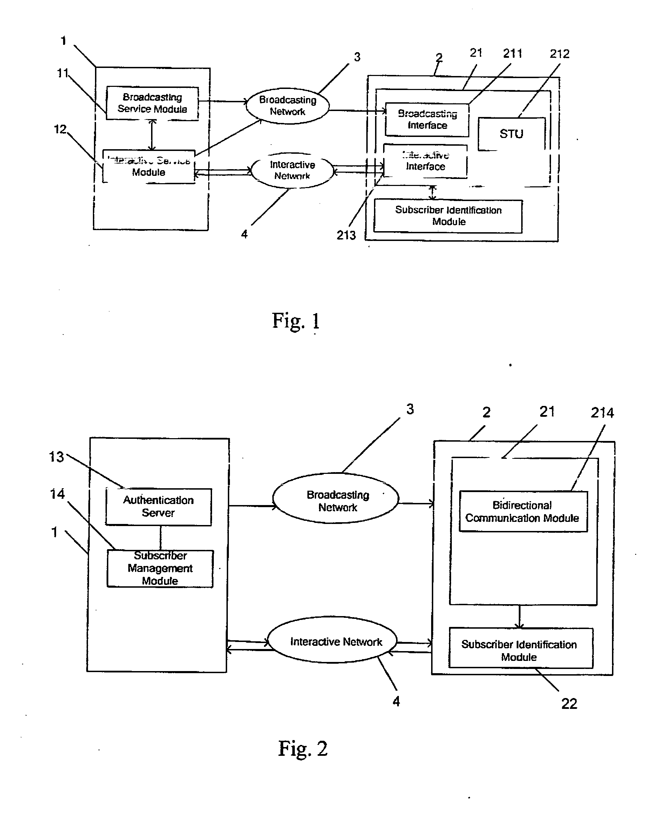

Referring to Fig. 1, which is a schematic diagram illustrating a reference model of DTV network with interactive function defined by DVB standard. A head end 1 includes a broadcasting service module 11 for sending DTV program data and an interactive service module 12 for establishing bidirectional interaction between a subscriber terminal 2 and the head end 1. An STB 21 of the subscriber terminal 2 includes a broadcasting interface 211 for receiving DTV program data and interactive interface 212 for establishing bidirectional interaction between the subscriber terminal 2 and the head end 1.

The broadcasting service module 11 sends encrypted DTV programs through a broadcasting network 3, and these signals are received by the broadcasting interface 211 of the STB 21 to enable the subscriber to watch the DTV programs. The broadcasting network 3 includes a channel for transmitting and receiving the DTV programs (referred to as broadcasting channel). The broadcasting channel establishes unidirectional data transmission between the head end 1 and each subscriber terminal 2, and has been provided in the unidirectional DTV network.

The interactive service module 12 is connected to the STB 21 of the subscriber terminal 2 through an interactive network 4, establishing a bidirectional interactive channel between the head end 1 and each subscriber terminal 2. The bidirectional interactive channel includes a backward interactive channel and a forward interactive channel. The backward interactive channel refers to a channel from the subscriber terminal 2 to the head end 1, for enabling the subscriber to transmit a request or return a response. The forward interactive channel refers to a channel from the head end 1 to the subscriber terminal 2, for transmitting the operator's data or responding to the subscriber's request. This forward interactive channel may be embedded into the broadcasting network 3. In fact, the bidirectional interactive DTV network is constructed by adding a bidirectional interactive channel into a unidirectional DTV network.

No matter it is a unidirectional DTV network or a bidirectional DTV network developed based on a unidirectional DTV network, the profit model of the operator is different from that of conventional analog television era. That is, the operator gains profit mainly by charging subscribers for watching DTV programs, rather than depending on TV advertisement and network maintenance fee. Therefore, a conditional access system (CAS) is introduced into DTV to ensure that programs can be watched only by legal subscribers in the DTV network.

The function is implemented in the prior art by using a subscriber identification module (e.g. smart card) of a legal subscriber. When this smart card is connected to STB 21, a key in the smart card is read and encrypted DTV programs are decrypted and decoded to enable the programs to be watched, so as to ensure that the programs are watched only by legal subscribers. However, there is still DTV piracy by common way of physically cloning the smart card of the subscriber terminal 2. Because on-line information of subscribers can not be acquired at the head end 1, such illegal subscribers can collectively use an account number of one subscriber without being found, which causes loss to the operator.

In order for the head end to acquire on-line information of subscribers, a patent application CN 1 633 173 A entitled "METHOD AND SYSTEM FOR LEARNING INFORMATION ABOUT ON-LINE/OFF-LINE/IN-LINE OF USER" was filed with the Chinese state intellectual property office by the present applicant.

Referring to Fig. 2, which is a structural schematic diagram illustrating the principle of the DTV network of the above patent application. The DTV network is developed based on unidirectional DTV network and according to DVB standard. It includes a head end 1 and several subscriber terminals 2. Each subscriber terminal 2 includes an STB 21 and a subscriber identification module 22. That is, the STB 21 is added with a bidirectional communication module 214, and the head end 1 is configured with an authentication server 13, which is connected to a subscriber management module 14 of the head end 1. The head end 1 and the subscriber terminal 2 establish bidirectional interactive communication through an interactive network 4.

The STB 21 is used for performing the following operation: the STB 21 acquires a unique subscriber identity (ID) in the subscriber identification module 22 and then initiate an authentication request to the head end 1 through the bidirectional communication module 214 when the STB 21 starts up, besides performing conventional functions such as tuning, demodulation, TS demultiplexing, descrambling, decoding, etc.; and then the STB 21 receives the response message of the head end 1, and if the received response message is information indicating successful authentication, the STB 21 continues to perform conventional workflow such as tuning, demultiplexing etc., otherwise, the DTV program can not be watched; furthermore, the STB 21 reports an off-line message to the head end 1 through the bidirectional communication module 214 when the STB 21 shuts down.

The bidirectional communication module 214 is used for performing communication work of the backward interactive channel, which mostly includes: (1) actively initiating connection with the authentication server 13 of the head end 1; (2) receiving return data of the STB 21 and sending the data to the authentication server 13 of the head end 1; (3) receiving data from the authentication server 13 of the head end 1, and sending the data to the STB 21.

The subscriber identification module 22 is used for storing the unique subscriber ID and a key for decrypting DTV program data, pairing with the STB 21, and recording program watching information. Currently used smart card is a typical subscriber identification module.

The authentication server 13 is used for receiving return data of subscribers and performing subscriber authentication function, which includes: (1) as a server, receiving return data of each subscriber from each subscriber terminal serving as a client; (2) reading subscriber ID recording data from a Subscriber Management Module (SMS) of the head end; (3) maintaining on-line information of each STB according to the ID information reported by subscribers during start-up and shut-down; (4) performing subscriber authentication.

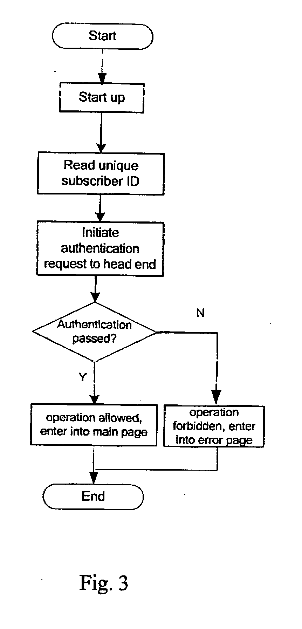

The method for acquiring on-line information of subscribers in the DTV network is disclosed according to the above disclosed DTV network (referring to Figs. 3-6). The method includes a process of sending an authentication request by the STB, a process of processing the authentication request by the head end, a process of sending a shutdown request of the subscriber by the STB and a process of processing the shutdown request of the subscriber by the head end.

(I) the process of sending an authentication request by the STB (referring to Fig. 3)

when the STB starts up, it reads a unique subscriber ID in the subscriber identification module 22, initiates an authentication request including the unique subscriber ID to the head end 1 through the bidirectional communication module 214, and waits for a response message from the head end 1; only when the received response message indicates that the authentication is passed, the STB 21 may receive DTV program data.

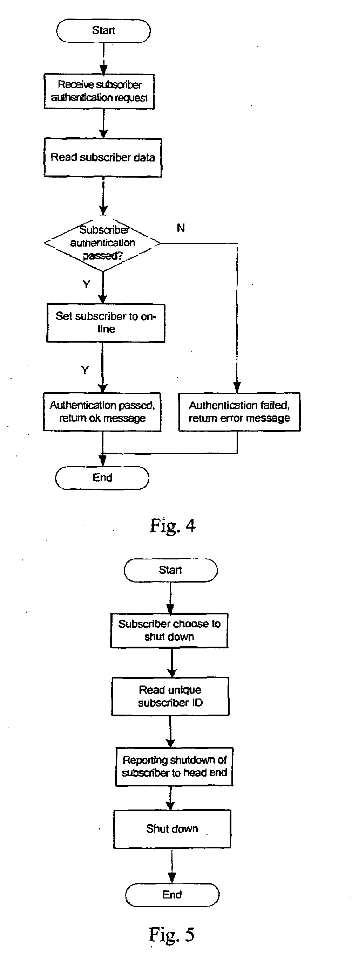

(II) the process of processing the authentication request by the head end 1 (referring to Fig. 4)

When the authentication server 13 of the head end 1 receives the authentication request of the subscriber, it reads and authenticates the unique subscriber ID. If the authentication is passed, the subscriber is set to on-line, and the authentication server 13 returns a message indicating successful authentication; otherwise, the subscriber is illegal, and the authentication server 13 returns a response message indicating failed authentication to the subscriber terminal.

(III) The process of sending a shutdown request of the subscriber by the STB (referring to Fig. 5)

When the subscriber terminal is to shut down, the STB reads the unique subscriber ID and reports the shutdown of the subscriber to the head end, and then the subscriber terminal shuts down.

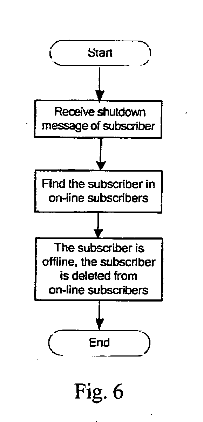

(IV) the process of processing the shutdown request of the subscriber by the head end (referring to Fig. 6)

When the head end receives the shutdown request of the subscriber, it finds the subscriber from the on-line subscribers, and deletes the subscriber from the on-line subscribers.

In the above method, because the head end acquires on-line states of subscribers in time and reduces illegal accesses to the DTV network by using on-line information of the subscribers, the loss of the operator is reduced.

However, if the subscribers initiate subscriber ID authentication simultaneously in a relatively short time period, this will result in the congestion of the interactive network or the overload of the processing capacity of the authentication server. In particular, with the continual increase of the quantities of the subscribers and the operation of the network adapting to a large number of subscribers, the problem of performing ID authentication of a lot of subscribers during start-up simultaneously in a short time period need to be solved.
US 2003/033601 A1 discloses an expiration date monitoring system comprising a terminal and a server for monitoring an expiration date of this terminal, the server monitoring the expiration date for each function of this terminal and for each content
US2004/0123313 A1 discloses a solution to update a key in various situations in order to secure liability of a service in a conditional access system for a digital cable television service.

### Summary of the Invention

Some embodiments of the present invention provide a method for acquiring on-line information of subscribers, so as to solve the technical problem in the prior art that network congestion or the overload of the authentication server is caused by performing ID authentication of a lot of subscribers during start-up simultaneously in the procedure of acquiring on-line information of the subscribers by the head end.

The embodiments of the present invention provide the following technical solution:
According to an embodiment of the invention, a method for acquiring on-line information of subscribers includes: reading, by a set top box, STB, in a subscriber terminal, life cycle of a key from key information stored in a subscriber identification module in the subscriber terminal when the STB starts up; initiating, by the STB, an authentication request to a head end when the STB determines remaining effective time of the life cycle of the key is less than a threshold value, and performing, by the head end, authentication in accordance with the authentication request; determining, by the head end, whether the authentication is passed, if the authentication is passed, returning a successful response message including new key information, otherwise returning a failed response message; updating, by the STB, the key information when receiving the successful response message; and sequentially determining, by the head end, whether life cycle of the key for the subscriber terminal expires, and if so, determining whether state of the subscriber terminal is on-line; and if the state of the subscriber terminal is on-line, determining whether on-line time of the subscriber terminal is larger than a preset maximum on-line time, and if so, sending a subscriber roll-call authentication message to the subscriber terminal, and when a response message from the subscriber terminal is received in a prescribed time period, sending, by the head end, an updated key information to the subscriber terminal, and setting the state of the subscriber terminal to on-line.
According to another embodiment of the invention, a head end is configured to perform authentication in accordance with an authentication request initiated by a set top box, STB, of a subscriber terminal; determine whether the authentication is passed; return a successful response message including new key information if the authentication is passed; return a failed response message if the authentication is not passed; sequentially determine whether remaining time of a life cycle of a key for the subscriber terminal is less than a threshold value, and if so, determine whether state of the subscriber terminal is on-line; and if the state of the subscriber terminal is on-line, determine whether on-line time of the subscriber terminal is larger than a preset maximum on-line time, and if so, send a subscriber roll-call authentication message to the subscriber terminal; and when a response message of the subscriber terminal is received in a prescribed time period, send an updated key information to the subscriber terminal and set the subscriber terminal to on-line state.

A method for acquiring on-line information of subscribers includes:
reading, by a set top box (STB) in the subscriber terminal, life cycle of a key from key information stored in a subscriber identification module in the subscriber terminal when the STB starts up;
initiating, by the STB, an authentication request to a head end when the life cycle expires, and performing, by the head end, authentication in accordance with the authentication request;
determining, by the head end, whether the authentication is passed, if the authentication is passed, returning a successful response message including new key information, otherwise returning a failed response message;
updating, by the STB, the key information when receiving the successful response message.

The method further includes: setting the subscriber terminal to on-line state after the authentication is passed.

The method further includes: if the life cycle does not expire, determining whether the remaining effective time of the life cycle is less than a threshold value, if so, initiating an authentication request to the head end by the STB, otherwise the procedure ending.

The method further includes: waiting for a random time before initiating an authentication request to the head end.

The process of determining whether the authentication is passed comprises determining whether a unique subscriber ID of the subscriber terminal in the authentication request is legal.

The method further includes: after authentication is passed, determining whether the subscriber terminal is on-line, if the subscriber is on-line, returning the successful response message including new key information.

The method further includes: sequentially determining, by the head end, whether the life cycle of the key for each subscriber terminal expires, if so, sending a subscriber roll-call authentication message to the subscriber terminal, otherwise the procedure ending, sending, by the head end, an updated key information to the subscriber terminal, and setting the subscriber terminal to on-line state when a response message of the subscriber terminal is received in a prescribed time period; updating, by the subscriber terminal, the key information.

The method further includes: if the life cycle of the key does not expire, determining whether the remaining effective time of the life cycle is less than a threshold value, if so, sending the subscriber roll-call authentication message to the subscriber terminal, otherwise the procedure ending.

The method further includes: if the life cycle of the key for the subscriber terminal expires, determining whether the state of the subscriber terminal is on-line; and if the state of the subscriber terminal is on-line, determining on-line time of the subscriber terminal is larger than a preset maximum on-line time, if so, sending the subscriber roll-call authentication message to the subscriber terminal, otherwise the procedure ending.

The method further includes: receiving, by the subscriber terminal, the roll-call authentication message, and returning a response message including a unique subscriber ID of the subscriber terminal.

The method further includes: sending, by the STB, a shutdown authentication request when the STB shuts down; receiving, by the head end, the authentication request, and if the authentication is passed, setting the subscriber terminal to off-line state.

A further embodiment of the present invention provides a subscriber terminal, the subscriber terminal including:
a subscriber identification module configured to store key information for decrypting encrypted digital television (DTV) program data, the key information including a key and life cycle of the key; and
a set top box (STB) configured to read the life cycle of the key from the subscriber identification module when the STB starts up, initiate an authentication request to a head end when the life cycle expires, and update the key information when receiving a successful response message including new key information from the head end.

A further embodiment of the present invention provides a head end, the head end being configured to perform authentication in accordance with an authentication request initiated by a set top box (STB) of a subscriber terminal; determine whether the authentication is passed; return a successful response message including new key information if the authentication is passed, and return a failed response message if the authentication is not passed.

Some embodiments of the present invention possess the following advantages compared to the prior art: an authentication request is initiated when the life cycle of the key expires or when the remaining effective time of the life cycle is less than a threshold, so the processes in the prior art are avoided in which each subscriber terminal needs to initiate an authentication request during start-up, and therefore the problem of network congestion or the overload of the authentication server is reduced. Moreover, some embodiments of the present invention add a process of initiating on-line authentication procedure by the head end, thereby enabling the head end to know on-line information of subscribers in time, and further reducing illegal accesses to the DTV networks.

### Brief Descriptions of the Drawings

Fig. 1 is a schematic diagram illustrating a reference model of a DTV network with interactive function defined by DVB standard in the prior art;

Fig. 2 is a structural schematic diagram illustrating the principle of a DTV network with interactive function in the prior art;

Fig. 3 is a flow chart illustrating a process of sending an authentication request by the STB in the prior art;

Fig. 4 is a flow chart illustrating a process of processing the authentication request by the head end in the prior art;

Fig. 5 is a flow chart illustrating a process of sending a shutdown request of the subscriber by the STB in the prior art;

Fig. 6 is a flow chart illustrating a process of processing the shutdown request of the subscriber by the head end in the prior art;

Fig. 7 is a flow chart illustrating a procedure of acquiring on-line information of subscribers in the DTV network according to an embodiment of the present invention;

Fig. 8 is a flow chart illustrating on-line authentication performed by the head end according to an embodiment of the present invention.

### Detailed Descriptions of the Embodiments

The present invention is hereinafter described in detail in conjunction with the embodiments and drawings.

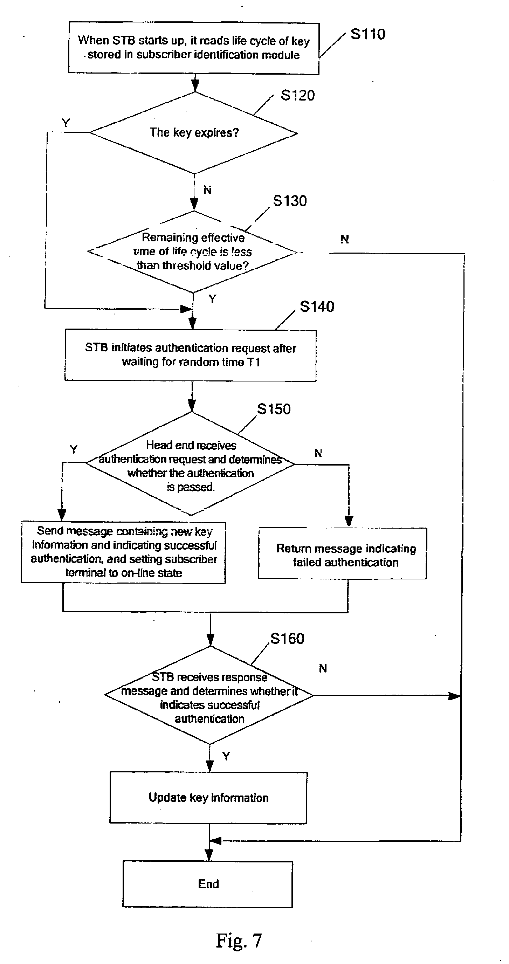

A flow chart illustrating a procedure of acquiring on-line information of subscribers in the DTV network according to an embodiment of the present invention is shown in Fig. 7.

S110: when the STB 21 starts up, it reads life cycle of a key stored in the subscriber identification module 22;

Conditional program access is introduced into the DTV network so that programs of the DTV network can be watched only by legal subscribers. The conditional program access is the control of transmission of a control word. The head end 1 randomly generates a control word (CW) with which the scrambling of the DTV program signal transmitted by the head end 1 is controlled. In order to successfully descramble the scrambled signal at subscriber terminal 2, the subscriber terminal 2 is required to have the same CW as that of the head end 1 to control the descrambling. If the CW of the head end 1 is transmitted to the subscriber terminal 2 directly, the CW may be intercepted easily by hackers. Thus, the CW should be encrypted before transmitting.

At present, in order to increase the security of the CW transmission, a ciphertext produced by the first layer for encrypting the CW (referred to as entitlement control message (ECM)) generally is transmitted together with the scrambled code stream by multiplexing. The ECM further includes such information as time, price of the program, and entitlement control of the program, etc. The second layer is to encrypt the CW by using a secret key (SK), and the third layer is to encrypt the SK by using a program data key (PDK). The produced ciphertext and an entitlement instruction constitute an entitlement management message (EMM), which also includes subscriber entitlement information such as smart card number, entitlement time, entitlement level, etc. These information are mainly for carrying out the entitlement to the subscriber, so the EMM is a subscriber-oriented management message, which entitles the subscriber regarding when and on which channel the subscriber watches the program.

A double-key method is generally adopted to prevent the key from being intercepted by hackers. In the double-key method, a pair of keys is allocated to each subscriber. One of the keys is a key of the subscriber terminal referred to as private key, which is only used for decrypting, and generally stored in the subscriber identification module. The other one is a public key only used for encrypting. The two keys have a one-to-one corresponding relationship by an algorithm, and the encryption using the public key can only be decrypted by using the private key. Thus, we need not to transmit the key directly, thereby the security is very high. This is an authentication process known as digital signature. The private key (PK) (abbreviated as key) is generally stored in the subscriber identification module 22 (including smart card), therefore the EMM can only be decrypted by the subscriber terminal 2. That is to say, one smart card can only decrypt EMM information associated with itself, all the information for decrypting the ECM may be obtained after the decryption of EMM, then the CW may be obtained by decrypting the ECM, and the CW may be sent to a descrambler in the STB 21 to perform descrambling operation. All these decryption processes may be done within a decryption system in the smart card.

Also, besides the key, the key information in the subscriber identification module 22 further includes life cycle of the key. The initial key and its life cycle are preset in the smart card, and the subsequent key information may be sent to the subscriber terminal by the head end 1.

S 120: The STB 21 determines whether the life cycle of the key expires, if so, the procedure proceeds to process S 140, otherwise proceeds to processS130.

S130: The STB 21 determines whether the remaining effective time of the life cycle is less than a threshold value, if so, the procedure proceeds to S 140, otherwise the procedure ends. The threshold value is preset, and mainly for enabling the next key and the next key's life cycle to be acquired in advance before the last key expires. For example, a subscriber subscribes for a monthly payment channel for half a year, and he needs to acquire the entitlement and the key of next month at the end of a month. The threshold value may be half day, one day or one week depending on the type of the key Thus, because the STB 21 does not initiate an authentication request when the remaining effective time of the life cycle is not less than the threshold value, the number of initiating an authentication request by the STB 21 is reduced greatly

S 140: The STB 21 initiates an authentication request after waiting for a random time T1. Thus, the situation of initiating authentication requests by a lot of STBs simultaneously can be avoided

T1 may be set randomly by the STB 21, and may also be adjusted according to the subscriber scale of the network. In a particular embodiment, the head end may adjust T1 according to the number of the managed subscriber terminals, set the T1 value, and send the T1 value to each STB 21.

The authentication request includes a unique subscriber ID obtained from the subscriber identification module 22.

S 150: The authentication server 13 of the head end 1 receives the authentication request and acquires the unique subscriber ID from the authentication request. The authentication server 13 of the head end 1 then performs authentication according to the unique subscriber ID, for example, determines whether the subscriber is a legal subscriber in the DTV network according to the unique subscriber ID, whether a subscriber with the same unique subscriber ID are on-line. When the authentication succeeds, the authentication server 13 of the head end 1 sends a response message which includes new key information and indicates successful authentication, and sets the subscriber terminal 2 to on-line state; otherwise, the authentication server 13 of the head end 1 returns a response message indicating failed authentication to the subscriber terminal 2.

S 160: The STB 21 receives the response message and determines whether the response message indicates successful authentication, if so, the STB 21 updates the key information, otherwise the procedure ends.

When the life cycle of the key expires, the head end 1 encrypts the DTV program data using a new key, and sends the DTV program data to the STB 21. Without a corresponding new key, the DTV program data can not be decrypted, that is, the DTV program can not be watched.
The head end may acquire on-line information of subscriber terminals through the above processes, thereby reducing the use of illegal subscriber, and thus reducing the piracy.

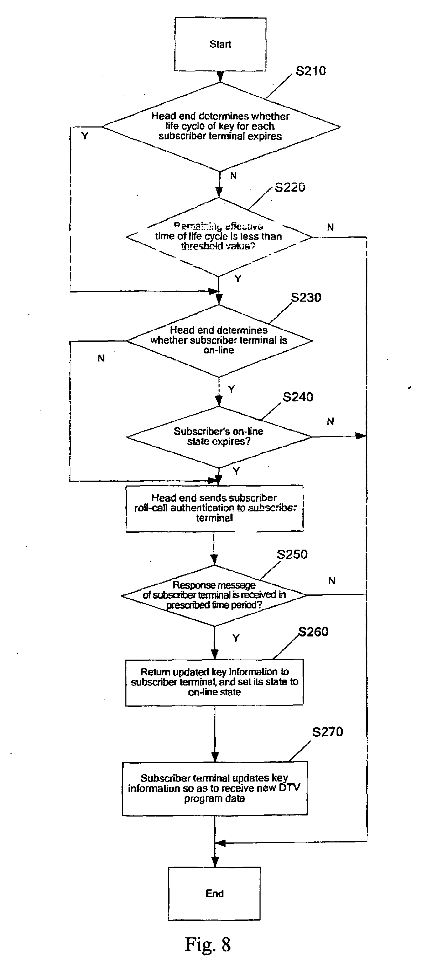

In the above disclosed method, when the key of the subscriber terminal 2 does nor expires, it is possible that the head end 1 does not set the subscriber terminal 2 to on-line state when the STB 21 of the subscriber terminal 2 starts up. Thus, another embodiment of the present invention additionally provides a procedure of on-line authentication, which includes the following processes as shown in Fig. 8:

S210: the head end 1 determines whether the life cycle of the key for each subscriber terminal expires, if so, the procedure proceeds to process S230, otherwise the procedure proceeds to process S220:

S220: the head end 1 determines whether the remaining effective time of the life cycle is less than the threshold value, if so, the procedure proceeds to process S240, otherwise the procedure ends;

S230: the head end 1 determines whether the subscriber terminal 2 is on-line, if so, the procedure proceeds to process S240, otherwise the procedure proceeds to process S250:

S240: the head end 1 determines whether the on-line state of the subscriber terminal 2 expires, if so, the procedure proceeds to process S250, otherwise the procedure ends; Specifically, a maximum on-line time is preset for each subscriber terminal 2 at the head end, and the process of determining whether the subscriber's on-line state expires is realized by determining whether the subscriber's on-line time is larger than the maximum on-line time. This is mainly to allow the head end 1 to initiate a roll-call again for the subscriber terminal already in on-line state;

S250: The head end 1 sends a roll-call authentication message to the subscriber terminal 2, the authentication message includes a unique subscriber ID, and if the subscriber roll-call authentication message is received when the STB 21 of the subscriber terminal 2 is operating, the STB 21 returns a response message including the unique subscriber ID of the subscriber terminal 2;

S260: When the response message of the subscriber terminal 2 is received in a prescribed time period, the head end 1 returns an updated key information to the subscriber terminal 2, and sets the state of the subscriber terminal 2 to on-line state.

S270: The subscriber terminal 2 updates the key information, so as to receive new DTV program data.

In order to acquire the subscriber terminal information better, the STB 21 may send a shutdown authentication request when the subscriber terminal 2 shuts down. The head end performs authentication after receiving the shutdown authentication request, and the authentication includes determining whether the unique subscriber ID is legal or not, the subscriber terminal is on-line or not, etc. The head end sets the subscriber to off-line state after the authentication is passed.

## Claims

1. A method for acquiring on-line information of subscribers, comprising:
reading (S110), by a set top box, STB, in a subscriber terminal (2), life cycle of a key from key information stored in a subscriber identification module (22) in the subscriber terminal (2) when the STB starts up;
initiating (S 140), by the STB, an authentication request to a head end (1) when the STB determines (S130) remaining effective time of the life cycle of the key is less than a threshold value, and performing(S 150), by the head end (1), - authentication in accordance with the authentication request;
determining (S150), by the head end (1), whether the authentication is passed, if the authentication is passed, returning a successful response message including new key information, otherwise returning a failed response message;
updating, by the STB (S160), the key information when receiving the successful response message; and
sequentially determining (S210), by the head end (1), whether life cycle of the key for the subscriber terminal (2) expires, and if so, determining (S230) whether state of the subscriber terminal (2) is on-line; and if the state of the subscriber terminal is on-line, determining (S240) whether on-line time of the subscriber terminal (2) is larger than a preset maximum on-line time, and if so, sending a subscriber roll-call authentication message to the subscriber terminal (2), and when a response message from the subscriber terminal (2) is received in a prescribed time period, sending (S260), by the head end (1), an updated key information to the subscriber terminal (2), and setting (S260) the state of the subscriber terminal (2) to on-line.

2. The method according to claim 1,further comprising: setting a state of the subscriber terminal (2) to on-line after the authentication is passed.

3. The method according to claim 1, further comprising: waiting (S140) for a random time before initiating an authentication request to the head end (1).

4. The method according to claim 1, wherein the process of determining whether the authentication is passed comprises determining whether a unique subscriber ID of the subscriber terminal (2) in the authentication request is legal.

5. The method according to claim 1, further comprising:
if the life cycle of the key for each subscriber terminal does not expire, determining (S220) whether remaining effective time of the life cycle is less than a threshold value, if so, sending the subscriber roll-call authentication message to the subscriber terminal (2), otherwise the procedure ending.

6. The method according to claim 1, further comprising: receiving, by the subscriber terminal(2), the roll-call authentication message, and returning a response message including a unique subscriber ID of the subscriber terminal(2).

7. The method according to claim 1, further comprising:
sending a shutdown authentication request when the STB shuts down;
receiving, by the head end (1), the authentication request, and if the authentication is passed, setting the subscriber terminal (2) to off line state.

8. A head end (1), configured to perform authentication (S150) in accordance with an authentication request initiated (S 140) by a set top box, STB, of a subscriber terminal (2); determine (S150) whether the authentication is passed; return a successful response message including new key information if the authentication is passed; return a failed response message if the authentication is not passed; sequentially determine (5210, S220) whether remaining time of a life cycle of a key for the subscriber terminal (2) is less than a threshold value, and if so, determine (S230) whether state of the subscriber terminal (2) is on-line; and if the state of the subscriber terminal (2) is on-line, determine (S240) whether on-line time of the subscriber terminal (2) is larger than a preset maximum on-line time, and if so, send a subscriber roll-call authentication message to the subscriber terminal (2); and when a response message of the subscriber terminal (2) is received in a prescribed time period, send (S260) an updated key information to the subscriber terminal (2) and set (S260) the subscriber terminal (2) to on-line state.

9. The head end according to claim 8, further configured to set the subscriber terminal to on-line state after the authentication is passed.

## Patentansprüche

1. Verfahren zum Beschaffen von Online-Informationen von Teilnehmern, mit den folgenden Schritten:
eine Set Top Box bzw. STB in einem Teilnehmerendgerät (2) liest (S110) den Lebenszyklus eines Schlüssels aus in einem Teilnehmeridentifikationsmodul (22) in dem Teilnehmerendgerät (2) gespeicherten Schlüsselinformationen, wenn die STB herauffährt;
die STB leitet eine Authentifikationsanforderung bei einer Kopfstation (1) ein (S140), wenn die STB bestimmt (S 130), dass die verbleibende effektive Zeit des Lebenszyklus des Schlüssels kleiner als ein Schwellenwert ist, und die Kopfstation (1) führt Authentifikation gemäß der Authentifikationsanforderung durch (S 150);
die Kopfstation (1) bestimmt (S150), ob die Authentifikation bestanden ist, wenn die Authentifikation bestanden ist, wird eine Erfolgreich-Antwortnachricht zurückgegeben, die neue Schlüsselinformationen enthält, andernfalls wird eine Misserfolg-Antwortnachricht zurückgegeben;
die STB aktualisiert (S160) die Schlüsselinformationen beim Empfang der Erfolgreich-Antwortnachricht; und
die Kopfstation (1) bestimmt sequenziell (S210), ob der Lebenszyklus des Schlüssels für das Teilnehmerendgerät (2) abläuft, und wenn dem so ist, wird bestimmt (S230), ob der Zustand des Teilnehmerendgeräts (2) Online ist; und wenn der Zustand des Teilnehmerendgeräts Online ist, wird bestimmt (S240), ob die Online-Zeit des Teilnehmerendgeräts (2) größer als eine voreingestellte maximale Online-Zeit ist, und wenn dem so ist, wird eine Teilnehmer-Anwesenheitsappell-Authentifikationsnachricht zu dem Teilnehmerendgerät (2) gesendet, und wenn in einem vorgeschriebenen Zeitraum eine Antwortnachricht von dem Teilnehmerendgerät (2) empfangen wird, sendet (S260) die Kopfstation (1) aktualisierte Schlüsselinformationen zu dem Teilnehmerendgerät (2) und der Zustand des Teilnehmerendgeräts (2) wird auf Online gesetzt (S260).

2. Verfahren nach Anspruch 1, ferner mit dem folgenden Schritt: Setzen eines Zustands des Teilnehmerendgeräts (2) auf Online, nachdem die Authentifikation bestanden ist.

3. Verfahren nach Anspruch 1, ferner mit dem folgenden Schritt: Warten (S140) für eine zufällige Zeit vor dem Einleiten einer Authentifikationsanforderung bei der Kopfstation (1).

4. Verfahren nach Anspruch 1, wobei der Prozess des Bestimmens, ob die Authentifikation bestanden ist, umfasst, zu bestimmen, ob eine eindeutige Teilnehmer-ID des Teilnehmerendgeräts (2) in der Authentifikationsanforderung legal ist.

5. Verfahren nach Anspruch 1, ferner mit den folgenden Schritten:
wenn der Lebenszyklus des Schlüssels für jedes Teilnehmerendgerät nicht abläuft, Bestimmen (S220), ob die verbleibende effektive Zeit des Lebenszyklus kleiner als ein Schwellenwert ist, wenn dem so ist, Senden der Teilnehmer-Anwesenheitsappell-Authentifikationsnachricht zu dem Teilnehmerendgerät (2), andernfalls endet die Prozedur.

6. Verfahren nach Anspruch 1, ferner mit dem folgenden Schritt: das Teilnehmerendgerät (2) empfängt die Anwesenheitsappell-Authentifikationsnachricht und es wird eine Antwortnachricht zurückgegeben, die eine eindeutige Teilnehmer-ID des Teilnehmerendgeräts (2) enthält.

7. Verfahren nach Anspruch 1, ferner mit den folgenden Schritten:
wenn die STB herunterfährt, wird eine Herunterfahr-Authentifikationsanforderung gesendet;
die Kopfstation (1) empfängt die Authentifikationsanforderung, und wenn die Authentifikation bestanden ist, wird das Teilnehmerendgerät (2) in den Offline-Zustand versetzt.

8. Kopfstation (1), die für Folgendes ausgelegt ist: Durchführen einer Authentifikation (S150) gemäß einer durch eine Set Top Box bzw. STB eines Teilnehmerendgeräts (2) eingeleiteten (S 140) Authentifikationsanforderung; Bestimmen (S150), ob die Authentifikation bestanden ist; Zurückgeben einer Erfolgreich-Antwortnachricht, die neue Schlüsselinformationen enthält, wenn die Authentifikation bestanden ist; Zurückgeben einer Failed-Antwortnachricht, wenn die Authentifikation nicht bestanden ist; sequenzielles Bestimmen (S210, S220), ob die verbleibende Zeit eines Lebenszyklus eines Schlüssels für das Teilnehmerendgerät (2) kleiner als ein Schwellenwert ist, und wenn dem so ist, Bestimmen (S230), ob der Zustand des Teilnehmerendgeräts (2) Online ist; und wenn der Zustand des Teilnehmerendgeräts (2) Online ist, Bestimmen (S240), ob die Online-Zeit des Teilnehmerendgeräts (2) größer als eine voreingestellte maximale Online-Zeit ist, und wenn dem so ist, Senden einer Teilnehmer-Anwesenheitsappell-Authentifikationsnachricht zu dem Teilnehmerendgerät (2); und wenn in einem vorgeschriebenen Zeitraum eine Antwortnachricht des Teilnehmerendgeräts (2) empfangen wird, Senden (S260) von aktualisierten Schlüsselinformationen zu dem Teilnehmerendgerät (2) und Versetzen (S260) des Teilnehmerendgeräts (2) in den Online-Zustand.

9. Kopfstation nach Anspruch 8, die ferner dafür ausgelegt ist, das Teilnehmerendgerät in den Online-Zustand zu versetzen, nachdem die Authentifikation bestanden ist.

## Revendications

1. Procédé d'acquisition d'informations en ligne sur des abonnés, comprenant :
la lecture (S110), par un boîtier décodeur, STB, dans un terminal d'abonné (2), du cycle de vie d'une clé à partir d'une information de clé stockée dans un module d'identification d'abonné (22) dans le terminal de l'abonné (2) lorsque le STB démarre ;
le lancement (S140), par le STB, d'une demande d'authentification à une tête de réseau (1) lorsque le STB détermine (S130) que le temps effectif restant du cycle de vie de la clé est moins qu'une valeur de seuil, et l'exécution (S150), par la tête de réseau (1), de l'authentification conformément à la demande d'authentification ;
la détermination (S150), par la tête du réseau (1), de si oui ou non l'authentification est acceptée et, si l'authentification est acceptée, le renvoi d'un message de succès de réponse comprenant une nouvelle information de clé, ou sinon le renvoi d'un message d'échec de réponse ;
la mise à jour (S160), par le STB, de l'information de clé lors de la réception du message de succès de la réponse ; et
la détermination séquentielle (S210), par la tête du réseau (1), de si oui ou non le cycle de vie de la clé pour le terminal de l'abonné (2) expire, et, si c'est le cas, la détermination (S230) de si oui ou non l'état du terminal de l'abonné (2) est en ligne ; et si l'état du terminal de l'abonné est en ligne, la détermination (S240) de si oui ou non le temps en ligne du terminal de l'abonné (2) est plus grand qu'un temps en ligne maximum préréglé, et si c'est le cas, l'envoi d'un message d'authentification d'appel d'abonné au terminal de l'abonné (2), et, lorsqu'un message de réponse venant du terminal de l'abonné (2) est reçu dans une période de temps prescrite, l'envoi (S260), par la tête du réseau (1), d'une information de clé mise à jour au terminal de l'abonné (2), et le réglage (S260) de l'état du terminal de l'abonné (2) sur en ligne.

2. Procédé selon la revendication 1, comprenant en outre : le réglage d'un état du terminal de l'abonné (2) sur en ligne après que l'authentification a été acceptée.

3. Procédé selon la revendication 1, comprenant en outre: l'attente (S140) pendant une période de temps aléatoire avant de lancer une demande d'authentification à la tête du réseau (1).

4. Procédé selon la revendication 1, dans lequel le processus de détermination de si oui ou non l'authentification est acceptée comprend la détermination de si oui ou non une identification unique d'abonné du terminal de l'abonné (2) dans la demande d'authentification est légitime.

5. Procédé selon la revendication 1, comprenant en outre :
si le cycle de vie de la clé pour chaque terminal d'abonné n'expire pas, la détermination (S220) de si oui ou non le temps effectif restant du cycle de vie est moins qu'une valeur de seuil, et si c'est le cas, l'envoi du message d'authentification d'appel d'abonné au terminal de l'abonné (2), sinon la cessation de la procédure.

6. Procédé selon la revendication 1, comprenant en outre : la réception, par le terminal de l'abonné (2), du message d'authentification d'appel, et le renvoi d'un message de réponse comprenant une identification unique d'abonné du terminal de l'abonné (2).

7. Procédé selon la revendication 1, comprenant en outre :
l'envoi d'une demande d'authentification d'arrêt lorsque le STB s'arrête ;
la réception, par la tête du réseau (1), de la demande d'authentification, et, si l'authentification est acceptée, le réglage du terminal de l'abonné (2) sur l'état hors ligne.

8. Tête de réseau (1), configurée de façon à exécuter l'authentification (S150) conformément à une demande d'authentification lancée (S140) par un boîtier décodeur, STB, d'un terminal d'abonné (2) ; déterminer (S150) si oui ou non l'authentification est acceptée ; renvoyer un message de succès de réponse comprenant une nouvelle information de clé si l'authentification est acceptée ; renvoyer un message d'échec de réponse si l'authentification n'est pas acceptée ; déterminer séquentiellement (S210, S220) si le temps restant d'un cycle de vie d'une clé pour le terminal de l'abonné (2) est moins qu'une valeur de seuil, et, si c'est le cas, déterminer (S230) si oui ou non l'état du terminal de l'abonné (2) est en ligne ; et si l'état du terminal de l'abonné (2) est en ligne, déterminer (S240) si oui ou non le temps en ligne du terminal de l'abonné (2) est plus grand qu'un temps en ligne maximum préréglé, et, si c'est le cas, envoyer un message d'authentification d'appel d'abonné au terminal de l'abonné (2) ; et, lorsqu'un message de réponse du terminal de l'abonné (2) est reçu dans une période de temps prescrite, envoyer (S260) une information de clé mise à jour au terminal de l'abonné (2) et régler (S260) le terminal de l'abonné (2) sur l'état en ligne.

9. Tête de réseau (1) selon la revendication 8, configurée en outre de façon à régler le terminal de l'abonné sur l'état en ligne après que l'authentification a été acceptée.
